Europäisches Patentamt

European Patent Office

Office européen des brevets

(19)

(11) Numéro de publication: **0 019 291**
**B1**

(12) **FASCICULE DE BREVET EUROPEEN**

(45) Date de publication du fascicule du brevet: **02.03.83**

(21) Numéro de dépôt: **80102750.9**

(22) Date de dépôt: **19.05.80**

(51) Int. Cl.³: **A 47 J 31/057,**
**A 47 J 31/06**

(54) **Cafetière ménagère.**

(30) Priorité: **22.05.79 FR 7912949**

(43) Date de publication de la demande:
**26.11.80 Bulletin 80/24**

(45) Mention de la délivrance du brevet:
**02.03.83 Bulletin 83/9**

(84) Etats contractants désignés:
**AT BE CH DE GB IT LI NL SE**

(56) Documents cités:
**DE - A - 2 605 957**
**DE - A - 2 658 295**
**NL - A - 7 706 110**

(73) Titulaire: **MOULINEX S.A.**
**7 à 15, rue Jules-Ferry**
**F-93170 Bagnolet (FR)**

(72) Inventeur: **Lemoine, Jean-François Mary**
**12, rue du Général-Morel**
**F-14112 Bieville-Beuville (FR)**

(74) Mandataire: **May, Hans Ulrich**
**Thierschstrasse 27**
**D-8000 München 22 (DE)**

Cafetière ménagère

L'invention se rapporte aux cafetières ménagères comprenant, dans un boîtier, un réservoir d'eau froide ainsi qu'un chauffe-eau alimenté par ce réservoir et alimentant lui-même une goulotte d'arrosage d'un filtre qui est monté sur ledit boîtier au-dessus d'un récipient amovible collecteur d'infusion, lequel filtre présente en son fond au moins un orifice d'écoulement.

L'invention concerne, plus précisément, les cafetières de ce genre dans lesquelles ledit orifice d'écoulement est équipé d'un dispositif d'obturation commandé par un doigt qui est mobile par rapport au boîtier et dont le déplacement est provoqué par les mouvements de mise en place et de retrait du collecteur d'infusion, de telle manière que ledit retrait entraîne la fermeture complète du dispositif d'obturation, empêchant ainsi tout écoulement de liquide en l'absence du collecteur, tandis que ladite mise en place provoque, par action du doigt mobile, l'ouverture du dispositif d'obturation en vue de la collecte de l'infusion. Une telle cafetière est décrite, par exemple, dans la demande de Brevet allemand DE—A—2 605 957, dans laquelle le dispositif d'obturation est constitué par un simple clapet comportant une touche de commande sur laquelle agit le doigt mobile.

L'invention a pour but d'apporter aux cafetières de ce type un perfectionnement permettant d'effectuer un choix de la vitesse de passage de l'infusion, ceci en vue d'obtenir, avec une même quantité de café en poudre, une infusion plus ou moins forte au gré de l'usager. Il est vrai que des dispositifs visant à ce but sont déjà connus, par exemple par la demande de Brevet néerlandais NL—A—77 06110 qui décrit un filtre à café présentant au moins un orifice d'écoulement équipé d'un dispositif d'obturation susceptible de prendre au moins deux positions d'ouverture, à savoir une position de grande ouverture ou de passage rapide de l'infusion, et une position de petite ouverture ou de passage lent. Cependant, dans ce filtre à café, le choix de la position d'ouverture est effectué par une action manuelle de l'usager directement sur le dispositif d'obturation.

Dans une cafetière selon l'invention, le filtre présente deux orifices d'écoulement de section différente l'un de grande ouverture de passage rapide de l'infusion et l'autre de petite ouverture de passage lent de l'infusion, le dispositif d'obturation comprend deux clapets distincts associés respectivement auxdits orifices et équipés chacun d'une touche de commande, et le filtre est monté mobile sur le boîtier entre une première position, pour laquelle la touche du premier clapet est située à portée du doigt mobile commandé par le collecteur d'infusion tandis que la touche du second clapet est hors d'atteinte de ce doigt, et une seconde position, pour laquelle la touche du second clapet est située à portée du doigt mobile tandis que la touche du premier clapet est hors d'atteinte de ce doigt.

Ainsi le choix de la vitesse de passage de l'infusion s'effectue simplement par réglage de la position du filtre sur le boîtier de la cafetière. Pour l'une des positions de ce filtre, la mise en place du collecteur d'infusion provoque automatiquement l'ouverture du premier clapet qui correspond, par exemple, au passage rapide de l'infusion, tandis que, pour l'autre position du filtre, la mise en place de ce collecteur provoque l'ouverture du second clapet qui correspond au passage lent. On notera que le retrait du collecteur d'infusion entraîne automatiquement la fermeture complète des clapets, aussi bien pour la première position, que pour la seconde position du filtre.

Les caractéristiques et avantages de l'invention ressortiront d'ailleurs de la description qui va suivre, à titre d'exemple, en référence aux dessins annexés dans lesquels:

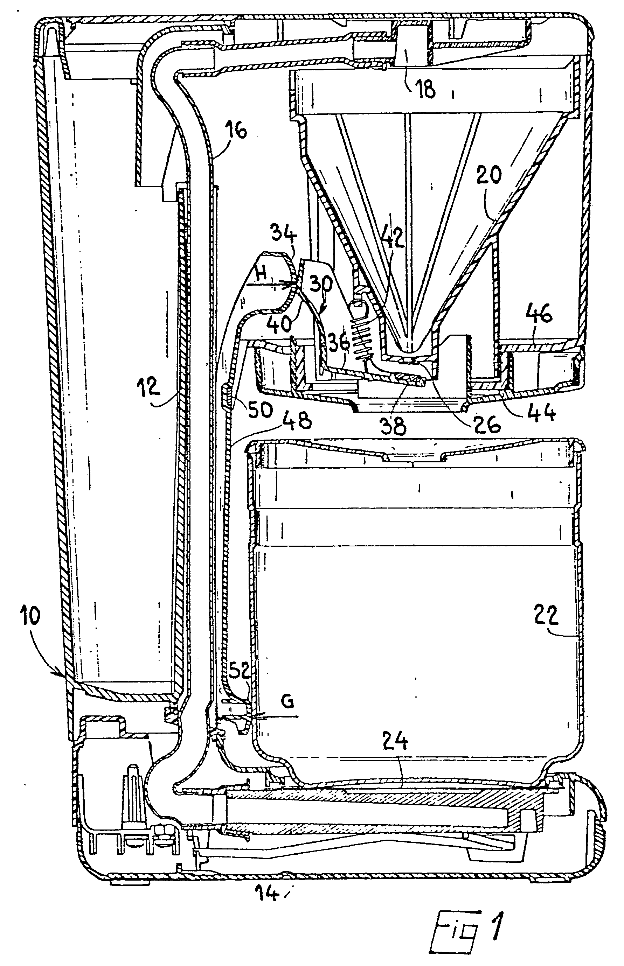

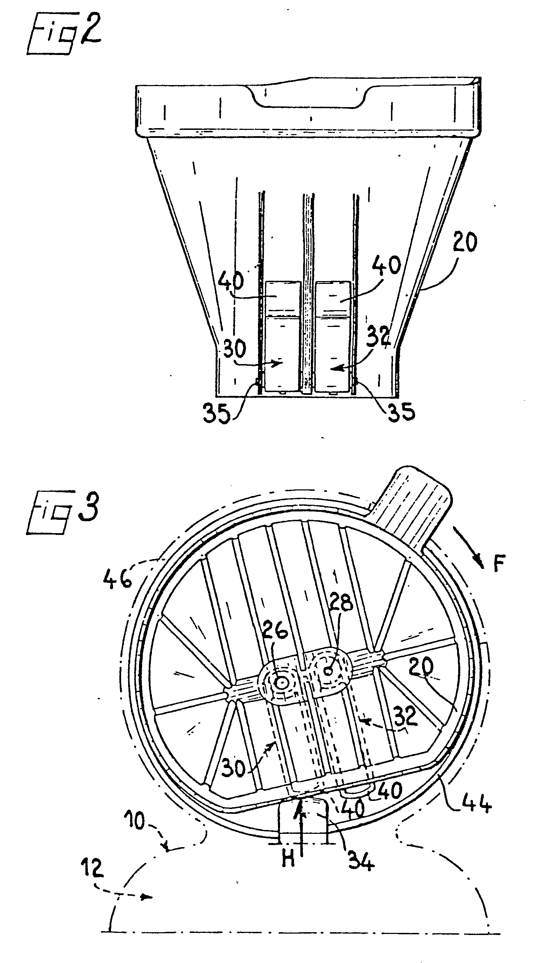

la figure 1 est une coupe verticale d'une cafetière selon l'invention; la figure 2 représente en élévation le filtre équipé de son dispositif d'obturation; la figure 3 représente, en traits pleins, le filtre vu de dessus, la bague de support sur laquelle il est posé et qui est montée rotative sur le boîtier de la cafetière, et le doigt mobile de commande du dispositif d'obturation.

La cafetière représentée à la figure 1 comprend, dans un boîtier 10, un réservoir d'eau froide 12 ainsi qu'un chauffe-eau électrique 14 alimenté par ce réservoir et alimentant lui-même par une tubulure 16 une goulotte 18 d'arrosage d'un filtre 20 qui est monté sur le boîtier 10 au-dessus d'un récipient collecteur d'infusion 22.

Le récipient collecteur 22 est posé de façon amovible sur la face supérieure d'une semelle 24 du boîtier, dans laquelle est agencé le chauffe-eau 14. Le filtre 20 présente la forme d'un cône adapté à recevoir un cornet en papier filtrant (non représenté) dans lequel on place le café en poudre. Ce filtre présente en son fond des orifices d'écoulement 26 et 28 qui sont équipés d'un dispositif d'obturation comprenant deux clapets 30 et 32 associés respectivement auxdits orifices. Ce dispositif d'obturation est commandé par un doigt 34 qui est mobile par rapport au boîtier et dont le déplacement est provoqué par les mouvements de mise en place et de retrait du collecteur d'infusion 22, de telle manière que ledit retrait entraîne la fermeture complète dudit dispositif d'obturation tandis que ladite mise en place en provoque l'ouverture par action du doigt mobile 34.

Les orifices d'écoulement 26 et 28 sont de section différente. Les clapets 30 et 32 sont identiques l'un à l'autre et comprennent chacun une pièce en forme de L, qui est montée pivotante en 35 sur le filtre 20 autour d'un axe horizontal, et dont l'aile inférieure 36 porte un bouchon souple 38 apte à fermer l'orifice associé, tandis que son aile montante 40 forme une touche de commande du clapet et s'étend à cet effet à proximité du doigt mobile 34 lorsque le filtre est monté dans la cafetière. Comme on le voit sur la figure 1, chaque clapet est soumis à l'action d'un ressort 42 qui tend à le rappeler vers sa position de fermeture. Ainsi, le dispositif d'obturation que constituent ensemble les clapets 30 et 32 peut prendre deux positions d'ouverture, à savoir: une position de grande ouverture, ou de passage rapide de l'infusion, correspondant à l'ouverture du clapet 30 associé à l'orifice de plus grande section 26; et une position de petite ouverture, ou de passage lent, correspondant à l'ouverture du clapet 32 associé à l'orifice de plus petite section 28.

Le filtre 20, équipé de ses clapets, est posé sur une bague de support 44 montée rotative autour d'un axe vertical sur une console 46 solidaire du boîtier et latérale au réservoir d'au froide. Le filtre 20 peut ainsi prendre: soit une première position (fig. 3) pour laquelle la touche de commande 40 du clapet 30 est située à portée du doigt mobile 34 alors que la touche 40 de l'autre clapet 32 est hors d'atteinte de ce doigt; soit une seconde position, que l'on atteindra par rotation de la bague 44 selon la flèche F de la figure 3, pour laquelle la touche 40 du clapet 32 sera à portée du doigt 34 alors que la touche 40 du clapet 30 sera hors d'atteinte de ce doigt.

Comme on le voit bien sur la figure 1, le doigt mobile 34 est constitué par l'extrémité supérieure d'un levier 48 qui est monté pivotant en un point 50 de sa région intermédiaire autour d'un axe horizontal sur une paroi latérale du réservoir 12, et dont l'extrémité inférieure 52 est située latéralement au collecteur d'infusion 22. Grâce à cette disposition, la mise en place de ce collecteur 22 sur la semelle 24 provoque un déplacement horizontal (flèche G) de ladite extrémité inférieure 52 vers ladite paroi latérale, et un déplacement horizontal inverse (flèche H) du doigt mobile 34 vers l'une ou l'autre des touches 40 du dispositif d'obturation du filtre.

Ainsi, la mise en place du collecteur 22 dans la cafetière amène le dispositif d'obturation soit en la position de passage rapide de l'infusion si le filtre est en sa première position, soit en la position de passage lent si le filtre est en sa seconde position.

Le retrait du collecteur libère bien entendu les deux clapets, lesquels sont alors rappelés vers leur position de fermeture par les ressorts 42. Ainsi tout écoulement de liquide sur la semelle 24 est évité lorsque le collecteur est enlevé.

**Revendications**

1. Cafetière ménagère comprenant, dans un boîtier (10), un réservoir d'eau froide (12) ainsi qu'un chauffe-eau (14) alimenté par ce réservoir et alimentant lui-même une goulotte (18) d'arrosage d'un filtre (20) qui est monté sur ledit boîtier (10) au-dessus d'un récipient amovible collecteur d'infusion (22), ledit filtre (20) présentant en son fond un moyen d'écoulement équipé d'un dispositif d'obturation comprenant un clapet muni d'une touche de commande commandée par un doigt (34) qui est mobile par rapport au boîtier (10) et dont le déplacement est provoqué par les mouvements de mise en place et de retrait du collecteur d'infusion (22) de telle manière que ledit retrait entraîne la fermeture complète dudit dispositif d'obturation tandis que ladite mise en place en provoque l'ouverture par action du doigt mobile (34), caractérisée en ce que, le moyen de passage de l'eau ou fond du filtre (20) étant constitué par deux orifices d'écoulement (26 et 28) de section différente l'un (26) de grande ouverture de passage rapide de l'infusion et l'autre (28) de petite ouverture de passage lent de l'infusion, et le dispositif d'obturation comprenant deux clapets (30 et 32) associés respectivement auxdits orifices (26 et 28) et équipés chacun d'une touche de commande (40), le filtre (20) est monté mobile sur le boîtier (10) entre une première position, pour laquelle la touche (40) du premier clapet (30) est située à portée du doigt (34) tandis que la touche (40) du second clapet (32) est hors d'atteinte de ce doigt, et une seconde position, pour laquelle la touche (40) du second clapet (32) est située à portée du doigt (34) tandis que la touche (40) du premier clapet (30) est hors d'atteinte de ce doigt.

2. Cafetière selon la revendication 1, caractérisée en ce que le filtre (20) passe de sa première à sa seconde position par un mouvement de rotation autour d'un axe vertical.

3. Cafetière selon la revendication 2, caractérisée en ce que le filtre (20) est posé sur une bague de support (44) montée rotative autour d'un axe vertical sur une console (46) solidaire du boîtier (10) et latérale au réservoir d'eau froide (12).

4. Cafetière selon l'une quelconque des revendications précédentes, caractérisée en ce que le doigt mobile (34) est constitué par l'extrémité supérieure d'un levier (48) qui est monté pivotant en un point (50) de sa région intermédiaire autour d'un axe horizontal sur une paroi latérale du réservoir (12), et dont l'extrémité inférieure (52) est située latéralement au collecteur d'infusion (22), de telle sorte que la mise en place de ce collecteur provoque un déplacement horizontal de ladite extrémité inférieure (52) vers ladite paroi latérale et un déplacement horizontal inverse dudit doigt mobile (34) vers le dispositif d'obturation porté par le filtre (20).

5. Cafetière selon les revendications 3 et 4, caractérisée en ce que chaque clapet (30,32) comporte une pièce pivotante en forme de L dont l'aile inférieure (36) porte un bouchon (38) apte à fermer l'orifice associé, et dont l'aile montante (40) forme touche de commande du clapet et s'étend à cet effet à proximité du doigt mobile (34).

**Claims**

1. Household coffee machine, comprising in a housing (10) a cold water tank (12) and an instantaneous water heater (14) supplied by said tank, said instantaneous water heater in turn supplying an overflow (18) for perfusing a filter (20), wherein said filter is retained over the housing (10) above a removable coffee pot (22) and is provided at its bottom with an outlet means equipped with a closure mechanism which includes a shutter member formed with an actuating button controlled by a finger (34), said finger being movable relative to the housing (10) and the displacement of which is effected by the movements during insertion and removal of the coffee pot (22) in such a way that the removal causes complete closure of said closure mechanism while insertion causes opening thereof due to the action of said movable finger (34), characterized in that the water passage means at the bottom of said filter (20) consists of two outlet apertures (26 and 28) of different cross-section, one (26) of said apertures having a large cross-section for rapid passage of the filtrate and the other one (28) having a small cross-section for slow passage of the filtrate, and that said closure mechanism comprises two shutter members (30 and 32) which respectively cooperate with said apertures (26 and 28) and are each provided with an actuating button (40), and that said filter (20) is disposed on said housing (10) so as to be movable between a first position, in which the actuating button (40) of said first shutter member (30) is within the operating range of said finger (34) while the actuating button (40) of said second shutter member (32) is out of the range of said finger, and a second position, in which the actuating button (40) of said second shutter member (32) is within the operating range of said finger (34) while the actuating button (40) of said first shutter member (30) is out of the range of said finger.

2. Coffee machine according to claim 1, characterized in that the filter (20) is moved from its first into its second position by a rotary movement about a vertical axis.

3. Coffee machine according to claim 2, characterized in that the filter (20) is seated on a retaining ring (44) which is held so as to be rotatable about a vertical axis on a console (46) fixedly joined to the housing (10) and disposed laterally of said cold water tank (12).

4. Coffee machine according to any of the preceding claims, characterized in that the movable finger (34) is formed at the top end of a lever (48) which is held at a location (50) of its middle portion to be pivotable about a horizontal axis on a sidewall of said tank (12) and the lower end (52) of which is disposed laterally of said coffee pot (22) such that insertion of said coffee pot causes a horizontal displacement of said lower end (52) towards said sidewall and a reverse horizontal displacement of said movable finger (34) towards the closure mechanism carried by said filter (20).

5. Coffee machine according to the claims 3 and 4, characterized in that each shutter member (30, 32) includes a pivotable L-shaped portion the bottom leg (36) of which carries a plug (38) suitable for closing the associated aperture and the upright leg (40) of which forms said actuating button of the shutter member and for this purpose extends into the vicinity of said movable finger (34).

**Patentansprüche**

1. Haushalts-Kaffeemaschine die in einem Gehäuse (10) einen Kaltwasserbehälter (12) sowie einen von diesem Behälter gespeisten Wasserdurchlauferhitzer (14) aufweist, der selbst einen Wasserüberlauf (18) zum Begießen eines Filters (20) speist, wobei der Filter über dem Gehäuse (10) ober. halb eines abnehmbaren Kaffeekrugs (22) gehalten ist und der Filter (20) an seinem Boden eine Auslaufvorrichtung aufweist, die mit einer Verschlußvorrichtung ausgerüstet ist, welche eine Verschlußklappe umfaßt, die mit einer Betätigungstaste versehen ist, welche von einem Finger (34) gesteuert wird, der bezüglich des Gehäuses (10) beweglich ist und dessen Verschiebung durch die Bewegungen des Einsetzens und Herausnehmens des Kaffeekruges (22) in der Weise bewirkt wird, daß das Herausnehmen das vollständige Schließen der Verschlußvorrichtung bewirkt, während das Einsetzen das Öffnen derselben durch die Wirkung des beweglichen Fingers (34) hervorruft, dadurch gekennzeichnet, daß die Wasserdurchlaufvorrichtung am Boden des Filters (20) aus zwei Ablauföffnungen (26 und 28) von verschiedenem Querschnitt besteht, die eine (26) von großer Öffnung für den raschen Durchlauf des Filtrats und die andere (28) von kleiner Öffnung für langsamen Durchlauf des Filtrats, und daß die Verschlußvorrichtung zwei Verschlußklappen (30 und 32) aufweist, die jeweils mit den Öffnungen (26 und 28) zusammenwirken und jede mit einer Betätigungstaste (40) ausgerüstet sind, daß der Filter (20) am Gehäuse (10) zwischen einer ersten Stellung, in der die Betätigungstaste (40) der ersten Verschlußklappe (30) im Wirkungsbereich des Fingers (34) angeordnet ist, während sich die Betätigungstaste (40) der zweiten Verschlußklappe (32) außerhalb der Reichweite dieses Fingers befindet, und einer zweiten Stellung, in welcher sich die Betätigungstaste (40) der zweiten Verschlußklappe (32) im Wirkungsbereich des Fingers (34) befindet, während die Betätigungstaste (40) der ersten Verschlußklappe (30) außerhalb der Reichweite dieses Fingers ist, beweglich gehalten ist.

2. Kaffeemaschine nach Anspruch 1, dadurch gekennzeichnet, daß der Filter (20) durch eine Drehbewegung um eine senkrechte Achse aus seiner ersten in seine zweite Stellung gelangt.

3. Kaffeemaschine nach Anspruch 2, dadurch gekennzeichnet, daß der Filter (20) auf einen Haltering (44) aufgesetzt ist, der an einer fest mit dem Gehäuse (10) verbundenen und seitlich vom Kaltwasserbehälter (12) angeordneten Konsole (46) um eine senkrechte Achse drehbar gehalten ist.

4. Kaffeemaschine nach einem der vorangehenden Ansprüche, dadurch gekennzeichnet, daß der bewegliche Finger (34) vom oberen Ende eines Hebels (48) gebildet wird, der an einem Punkt (50) seines mittleren Bereichs an einer Seitenwand des Behälters (12) um eine waagerechte Achse schwenkbar gehalten ist und dessen unteres Ende (52) seitlich vom Kaffeekrug (22) so angeordnet ist, daß das Einsetzen dieses Kaffeekrugs eine waagerechte Verschiebung des unteren Endes (52) in Richtung auf die Seitenwand und eine umgekehrte waagerechte Verschiebung des beweglichen Fingers (34) in Richtung auf die vom Filter (20) getragene Verschlußvorrichtung bewirkt.

5. Kaffeemaschine nach den Ansprüchen 3 und 4, dadurch gekennzeichnet, daß jede Verschlußklappe (30, 32) einen L-förmigen schwenkbaren Teil aufweist, dessen unterer Schenkel (36) einen Stopfen (38) trägt, der zum Verschließen der zugehörigen Öffnung geeignet ist, und dessen aufsteigender Schenkel (40) die Betätigungstaste der Verschlußklappe bildet und sich zu diesem Zweck bis in die Nähe des beweglichen Fingers (34) erstreckt.

0019291

Fig 1

Fig 2

Fig 3